# FASCICULE DE BREVET EUROPEEN

(11) **EP 1 204 824 B1**
(45) Date de publication et mention de la délivrance du brevet: **20.10.2004**
(21) Numéro de dépôt: 00915226.5
(22) Date de dépôt: 24.03.2000
(51) Int. Cl.: F15B 13/07, B29C 59/14

(54) **MACHINE A CARROUSEL POUR LE TRAITEMENT DE CORPS CREUX COMPORTANT UN CIRCUIT DE DISTRIBUTION DE PRESSION PERFECTIONNE**
DREHTISCHMASCHINE ZUM BEHANDELN VON HOHLKÖRPERN DIE EIN VERBESSERTES DRUCKVERTEILUNGSNETZ AUFWEISST
CONVEYOR FOR TREATING HOLLOW BODIES COMPRISING AN ADVANCED PRESSURE DISTRIBUTION CIRCUIT

(30) Priorité: 30.03.1999 FR 9904115
(43) Date de publication de la demande: 15.05.2002
(73) Titulaire: SIDEL, 76053 Le Havre Cedex (FR)
(72) Inventeur: GUIFFANT, Alain, F-76053 Le Havre Cedex (FR); RIUS, Jean-Michel, F-76053 Le Havre Cedex (FR)
(74) Mandataire: Siloret, Patrick
(86) Numéro de dépôt international: PCT/FR2000/000766
(87) Numéro de publication internationale: WO 2000/058631

(56) Documents cités:
- EP-A- 0 359 242
- WO-A-95/22413
- FR-A- 2 291 919
- GB-A- 1 159 562
- US-A- 3 066 697
- US-A- 4 189 897

## Description

L'invention se rapporte au domaine des machines à carrousel pour le traitement de corps creux, du type comportant plusieurs postes de traitement identiques destinés chacun à prendre en charge au moins un corps creux, et du type dans lequel, pour au moins une étape du traitement, on met le poste de traitement en communication avec une source de pression par l'intermédiaire d'un raccord tournant étanche, telle que la machine décrite dans le document FR -A- 2 291 919.

Dans certaines applications, on souhaite que, à chaque instant, au plus un poste soit en communication avec une source de pression donnée, par exemple pour garantir à coup sûr l'obtention d'un niveau de pression donné dans le poste de traitement considéré. Cela vaut notamment dans le cas où l'on dispose d'une source de pression ne pouvant fournir qu'un débit limité de fluide sous la pression désirée. Une telle situation se trouve par exemple lorsque le niveau de pression visé est inférieur à la pression atmosphérique.

Dans tous les cas, en vue d'une utilisation industrielle rentable, on cherche à obtenir de la machine une cadence de traitement la plus importante possible, tout en ayant recours à des moyens les moins coûteux possibles.

Le fait de multiplier les postes est une première ébauche de la solution à ce problème. Cependant, dans ce cas, chaque poste de traitement sur le carrousel se trouve à un stade particulier d'avancement du traitement, notamment dans le cadre des étapes au cours desquelles se produisent des variations continues des paramètres qui caractérisent l'avancement du traitement.

C'est notamment le cas des étapes de pompage car la création du vide ne peut pas se faire de manière instantanée. Chaque étape possède donc une durée et, au cours de cette durée, le niveau de pression évolue sans cesse.

Si le nombre de postes est important, il se peut que deux postes consécutifs, donc rapprochés l'un de l'autre, se trouvent en cours d'exécution de la même étape, mais à des stades d'avancement différents de cette étape. Les deux postes sont alors à des niveaux de pression différents.

Or, dans ce cas, il n'est pas possible de relier les deux postes à la même source de pression car les pressions dans les deux postes consécutifs viendraient à s'équilibrer quasi instantanément dès lors que le second des deux postes serait mis en communication avec la source. Le premier poste perdrait ainsi presque tout le bénéfice du déroulement de la première partie de l'étape considérée.

Dans le document US-A-5.585.066, il est décrit une machine de soufflage de récipients en matière plastique. Cette machine comporte un distributeur de pression de fluide qui est munie d'une couronne fixe dans laquelle sont aménagées, sur une face transversale, deux gorges annulaires concentriques de diamètres différents. Chacune des deux gorges est divisée en un certain nombre de tronçons qui sont reliés chacun à des sources de pression de différents niveaux, voire éventuellement à l'atmosphère. La machine décrite n'est prévue pour fonctionner qu'avec un seul poste de traitement. On voit que le distributeur comporte par ailleurs un organe rotatif qui est muni de deux orifices de communication dont chacun est destiné à circuler en regard de l'une des gorges, en regard consécutivement avec les différents tronçons de la gorge correspondante. Le distributeur décrit permet de mettre le poste de traitement en communication avec une première source d'air à haute pression, soit environ 6 bars, avec une deuxième source d'air à basse pression, soit environ 3 bars, ou avec l'atmosphère.

On le voit, la machine décrite n'apporte pas de solution pour la mise en oeuvre de plusieurs postes dans le cas où l'on souhaite que, à chaque instant, au plus un poste soit en communication avec une source de pression donnée.

En effet, dans ce cas, il serait nécessaire de prévoir que le tronçon considéré de la gorge présente une étendue angulaire correspondant à la durée de l'étape considérée.

Or, pour n'avoir qu'un seul poste en communication avec la source de pression reliée à ce tronçon, on serait obligé de prévoir que les orifices de prise de pression reliés à deux postes consécutifs soient écartés d'un angle au moins égal à l'étendue angulaire du tronçon. Ainsi, on limiterait forcément le nombre de postes que l'on peut installer sur le carrousel.

La seule solution que l'homme du métier aurait pu trouver à ce problème à partir de l'état de la technique aurait consisté à augmenter la puissance de la source de manière très importante de telle sorte que la durée de l'étape soit inférieure au temps séparant le passage de deux postes consécutifs devant un même point. Cette solution aurait donc conduit à une croissance exponentielle du coût des pompes à mettre en oeuvre, d'autant plus qu'il faudra tenir compte de l'augmentation des pertes de charges qui accompagne l'augmentation du débit de pompage.

L'invention a donc pour objet de proposer une machine qui puisse comporter un nombre important de postes, tout en garantissant qu'une source de pression ne soit en communication, à un instant donné, qu'au plus à un poste de traitement.

Dans ce but, l'invention propose une machine du type décrit précédemment, caractérisée en ce que, pour ladite étape, la machine comporte au moins deux sources de pression indépendantes et équivalentes, en ce que les postes sont répartis en autant de groupes que la machine comporte de sources, et en ce que les moyens de distribution sont tels que chaque source est associée à un groupe distinct.

Selon d'autres caractéristiques de l'invention :
- les moyens de distribution sont tels que, à chaque instant, une des dites sources est en communication au plus avec un poste ;
- les moyens de distribution sont tels qu'au moins un poste d'un groupe peut être mis en communication avec sa source associée alors qu'au moins un poste d'un autre groupe est en communication avec sa propre source associée ;
- le raccord tournant comporte autant de voies que la machine comporte de sources pour alimenter séparément les groupes de postes, et les moyens de distribution comportent, en aval du raccord tournant, des moyens de vannage individuels associés à chaque poste.
- le raccord étanche tournant est réalisé sous la forme d'un distributeur tournant comportant deux couronnes coaxiales, l'une fixe et l'autre rotative, qui sont en contact l'une avec l'autre de manière étanche par des faces de contact en vis-à-vis ; la couronne rotative comporte des orifices de communication qui sont reliés chacun à un poste, qui sont répartis en au moins autant de séries que la machine comporte de sources pour ladite étape, et qui débouchent dans la face de contact de la couronne rotative ; les orifices d'une même série correspondent tous à des postes d'un même groupe et suivent la même trajectoire, les orifices de deux séries différentes suivant des trajectoires différentes ; la couronne fixe comporte des lumières qui sont reliées à une source de pression et qui débouchent chacune dans la face de contact de la couronne fixe de manière à se trouver sur la trajectoire d'une série d'orifices de la couronne rotative, de telle sorte qu'un poste est mis en communication avec une source de pression lorsque l'orifice correspondant se trouve en regard d'une lumière associée à cette source ; la couronne fixe comporte au moins autant de séries distinctes d'au moins une lumière que le nombre de séries d'orifices, et deux sources de pression correspondant à la même étape sont chacune reliée à une lumière de deux séries distinctes de lumières de la couronne fixe ;
- les orifices de tous les postes d'un même groupe appartiennent à la même série ;
- les faces de contact des deux couronnes sont des faces annulaires perpendiculaires à l'axe de rotation du carrousel ;
- les orifices d'une même série sont agencés selon un cercle, et deux séries d'orifices sont agencées selon deux cercles de diamètres différents ;
- les orifices d'une même série sont répartis angulairement de manière régulière autour de l'axe de rotation du carrousel, et les orifices de deux séries différentes comportant le même nombre d'orifices sont intercalés angulairement ;
- les lumières correspondant à deux sources de pression indépendantes, équivalentes et utilisées pour ladite étape, sont agencées sur le même secteur angulaire et sur des diamètres différents correspondant respectivement aux diamètres des cercles selon lesquels sont agencées les séries d'orifices auxquelles correspondent les dites sources ;
- deux orifices consécutifs d'une même série sont séparés angulairement par un secteur angulaire au moins égal au secteur angulaire sur lequel s'étend la lumière correspondant à ladite série ;
- le traitement comporte une deuxième étape pendant laquelle on met les postes de traitement en communication, par l'intermédiaire du distributeur tournant, avec des secondes sources de pression pour atteindre un second niveau de pression, la couronne fixe comporte, dans le prolongement de chacune des premières lumières, des secondes lumières qui sont reliées chacune à une des secondes sources de pression, et les deux lumières associées à une même série d'orifices sont séparées par un secteur angulaire empêchant la communication simultanée d'un même orifice avec les deux lumières ;
- les sources de pression sont à une pression inférieure à la pression atmosphérique ;
- le traitement comprend une étape pour laquelle il est créé un plasma froid à basse pression, en vue du dépôt d'un revêtement sur le corps creux, il comprend au moins une étape de pompage pour faire chuter la pression à l'intérieur du poste de traitement, et l'étape de pompage est réalisée à l'aide d'au moins deux pompes qui sont chacune associées à un groupe distinct de postes, conformément à l'une quelconque des caractéristiques précédentes.

L'invention propose aussi un distributeur tournant pour une machine à carrousel de traitement de corps creux, la machine comportant plusieurs postes de traitement identiques destinés chacun à prendre en charge au moins un corps creux, du type dans lequel le distributeur comporte deux couronnes coaxiales, l'une fixe et l'autre rotative, qui sont en contact l'une avec l'autre de manière étanche par des faces de contact en vis-à-vis, du type dans lequel la couronne rotative comporte des orifices de communication qui sont destinés chacun à être reliés à un poste et qui débouchent dans la face de contact de la couronne rotative, et du type dans lequel la couronne fixe comporte au moins une lumière qui est destinée à être reliée à une source de pression de la machine et qui débouche dans la face de contact de la couronne fixe de manière à se trouver sur la trajectoire des orifices de la couronne rotative, de telle sorte qu'un poste est mis en communication avec la source de pression lorsque l'orifice correspondant se trouve en regard de la lumière, caractérisé en ce que les orifices de la couronne rotative sont répartis en au moins deux séries, en ce que les orifices d'une même série suivent la même trajectoire tandis que les orifices de deux séries différentes suivent des trajectoires différentes, en ce que la couronne fixe comporte autant de séries distinctes d'au moins une lumière que le nombre de séries d'orifices, chacune des lumières étant agencée sur la trajectoire d'une des séries d'orifices, et en ce que deux sources de pression indépendantes et équivalentes sont reliées chacune à une lumière de deux séries distinctes.

Selon encore d'autres caractéristiques du distributeur selon l'invention :
- les faces de contact des deux couronnes sont des faces annulaires perpendiculaires à l'axe de rotation de la couronne rotative ;
- les orifices d'une même série sont agencés selon un cercle, et deux séries d'orifices sont agencées selon deux cercles de diamètres différents ;
- les orifices d'une même série sont répartis angulairement de manière régulière autour de l'axe de rotation, et les orifices de deux séries différentes comportant le même nombre d'orifices sont intercalés angulairement ;
- les lumières correspondant à deux sources de pression sont agencées sur le même secteur angulaire et sur des diamètres différents correspondant respectivement aux diamètres des cercles selon lesquels sont agencées les séries d'orifices auxquelles correspondent les dites sources ;
- deux orifices consécutifs d'une même série sont séparés angulairement par un secteur angulaire au moins égal au secteur angulaire sur lequel s'étend la lumière correspondant à ladite série d'orifices ;
- la couronne fixe comporte, pour chaque série de lumières, au moins deux lumières dans le prolongement l'une de l'autre, et deux lumières d'une même série sont séparées par un secteur angulaire empêchant la communication simultanée d'un même orifice avec les deux lumières.

D'autres caractéristiques et avantages de l'invention apparaîtront à la lecture de la description détaillée qui suit ainsi que dans les dessins annexés dans lesquels :
- la figure 1 est une vue schématique d'une machine de traitement multipostes selon l'invention ;
- la figure 2 est une vue de la face de contact de la couronne fixe d'un distributeur pour une machine selon l'invention ;
- la figure 3 est une vue de la face de contact de la couronne rotative du distributeur ;
- la figure 4 est une vue en coupe axiale du distributeur ; et
- les figures 5 à 8 sont des diagrammes illustrant différentes positions relatives de certains des orifices de la couronne rotative avec les des lumières de la couronne fixe du distributeur.

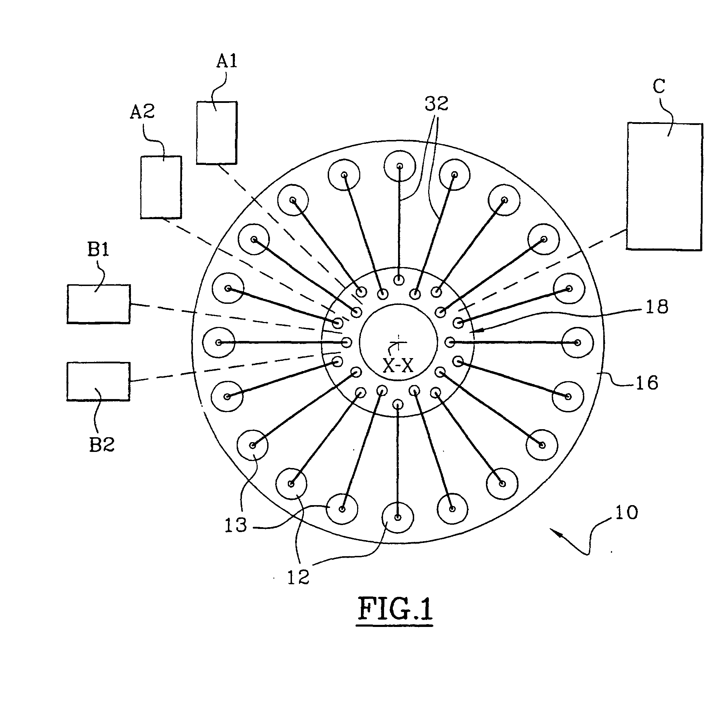

On a illustré sur la figure 1 de manière très schématique un exemple de réalisation d'une machine conforme aux enseignements de l'invention.

En l'occurrence la machine 10 illustrée est destinée à effectuer un traitement sur des corps creux, le traitement consistant à déposer, à l'aide d'un plasma basse pression, un revêtement sur les corps creux. Les corps creux en question sont par exemple des récipients tels que des bouteilles ou des flacons, et ils peuvent être réalisés en un matériau plastique tel que le polyéthylène téréphtalate.

L'utilisation d'un plasma basse pression nécessite d'opérer dans une cavité réactionnelle dans laquelle la pression absolue est de préférence inférieure à un millibar.

En vue d'une utilisation industrielle, la machine est destinée à permettre le traitement de plusieurs milliers, voire plusieurs dizaines de milliers de corps creux par heure. A cet effet, la machine 10 comporte plusieurs postes de traitement 12, 13, en l'occurrence vingt postes qui sont portés par un carrousel 16 entraîné en rotation autour d'un axe X-X. Tous les postes 12, 13 sont identiques et sont agencés sur un cercle autour de l'axe X-X. Ils sont chacun destinés à recevoir au moins un corps creux pour que celui-ci subisse le traitement prévu au cours de la rotation du carrousel 16. Eventuellement, on peut envisager que le poste de traitement 12, 13 prenne en charge plusieurs corps creux, soit à l'intérieur d'une cavité réactionnelle unique, soit à l'intérieur de plusieurs cavités réactionnelles.

Dans l'exemple illustré, la machine est destinée à mettre en oeuvre un traitement de dépôt en trois étapes principales : une première étape de pompage, une deuxième étape de pompage, et une étape de dépôt. Les deux étapes de pompage sont destinées à établir dans la chambre réactionnelle du poste considéré un vide suffisant pour permettre la création d'un plasma.

La première étape de pompage est destinée à créer un premier niveau de vide dans la cavité, par exemple en descendant à une pression absolue de l'ordre d'une cinquantaine de millibars. La deuxième étape de pompage est par exemple destinée à atteindre un niveau absolu de pression de l'ordre de 0,1 millibars. Enfin, au cours de l'étape de dépôt, on prévoit de maintenir cette pression absolue d'environ 0,1 millibar.

Sur la machine, chaque étape du traitement se déroule pendant que le poste considéré se déplace à l'intérieur d'un secteur angulaire déterminé autour de l'axe X-X.

Bien entendu, deux autres secteurs angulaires du mouvement de rotation du carrousel sont consacrés à des étapes de chargement et de déchargement des corps creux puisque la machine reçoit des corps creux en flux continu et les évacue de même après le traitement. Ce dernier doit donc se dérouler en un temps inférieur au temps nécessaire au carrousel pour effectuer un tour sur lui-même.

Pour les différentes étapes du traitement, les postes doivent donc être mis en communication avec des pompes. Or, le poids et le volume des pompes empêchent qu'elles soient embarquées sur le carrousel 16. Les pompes sont donc fixes et elles sont destinées à être reliées aux postes de traitement 12, 13 par l'intermédiaire d'un raccord tournant 18.

Conformément aux enseignements de l'invention, la machine 10 est conçue pour que les postes 12, 13 soient répartis en deux groupes, et, pour une même étape de pompage, elle comporte deux pompes indépendantes et équivalentes, les deux groupes de postes étant différenciés en fonction de celle des deux pompes à laquelle leurs postes sont reliés au cours de l'étape considérée.

Bien entendu, on pourrait prévoir un nombre supérieur de pompes et donc un nombre supérieur de groupes de postes.

Pour tirer avantage de cette disposition, la machine est conçue pour que deux postes d'un même groupe ne puissent pas communiquer simultanément avec la source de pression correspondant à ce groupe.

Ainsi, en séparant les postes en plusieurs groupes on pourra prévoir que les moyens de distribution puissent, à un instant donné, mettre deux postes de deux groupes différents en communication avec leurs sources associées respectives.

Ainsi, dans l'exemple proposé, les postes 12, 13 sont répartis alternativement en deux groupes que l'on qualifiera arbitrairement de postes pairs 12 et de postes impairs 13, un poste d'un groupe étant donc intercalé entre deux postes de l'autre groupe.

La première étape de pompage est donc assurée, pour le groupe des postes pairs 12, par une première pompe A1, et, pour le groupe des postes impairs 13, par une seconde pompe A2.

De la même manière, la deuxième étape de pompage est assurée par deux pompes B1 et B2.

Les deux pompes associées à une même étape du traitement sont indépendantes l'une de l'autre. Elles sont aussi équivalentes en ce qu'elles permettent d'assurer les mêmes niveaux de pression dans les postes, quel que soit le groupe auquel appartient le poste.

Au contraire, dans l'exemple choisi, l'étape de dépôt est assurée avec une unique pompe C qui est amenée à être reliée à chacun des postes. On notera que cette pompe unique C est amenée à être reliée, à chaque instant, à plusieurs postes.

L'invention peut être mise en oeuvre de différentes manières.

Dans un premier mode de réalisation (non représenté), on peut ainsi prévoir que le raccord tournant étanche soit un raccord simple à deux voies permettant de relier deux circuits de fluide fixes, en l'occurrence les pompes A1 et A2, à deux circuits de fluide embarqués sur le carrousel, à savoir les deux groupes de postes.

Un tel raccord comporte par exemple deux couronnes coaxiales munies chacune de deux gorges annulaires continues, chacune des gorges d'une couronne étant en vis-à-vis d'une gorge de l'autre couronne pour former ainsi deux espaces annulaires de transfert de fluide d'une couronne vers l'autre. Les deux espaces annulaires sont bien entendus reliés respectivement aux deux pompes A1 et A2 par l'intermédiaire de la couronne fixe.

Dans ce mode de réalisation, on prévoit par ailleurs que les moyens de distribution comportent par ailleurs, au niveau de chaque poste, des vannes individuelles agencées dans une conduite reliant chaque poste à l'espace annulaire correspondant du raccord tournant. Chacune de ces vannes est alors commandée en temps utile pour ouvrir ou fermer la communication du poste considéré avec l'espace correspondant. Les vannes peuvent être des vannes électromagnétiques ou des vannes mécaniques commandées par des cames fixes disposées autour du carrousel.

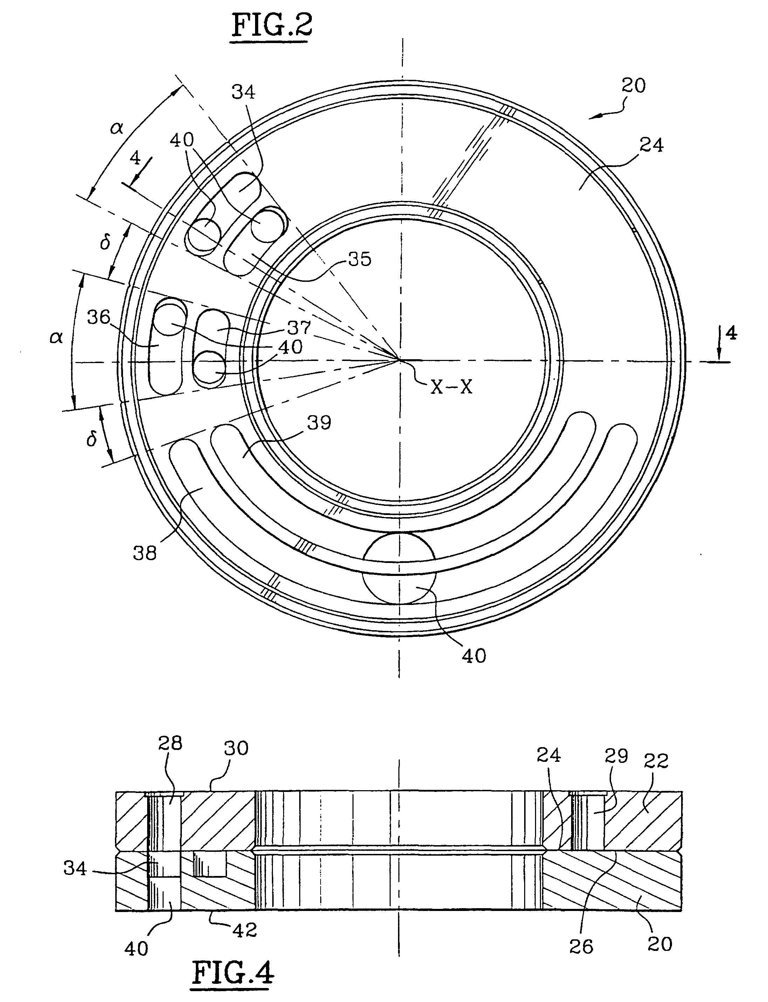

Cependant, dans un mode de réalisation préféré de l'invention, la machine 10 comporte un distributeur tournant perfectionné illustré plus particulièrement aux figures 2 à 4.

Contrairement à un simple raccord tournant, le distributeur tournant 18 n'a pas uniquement pour fonction de relier un circuit de fluide fixe à un circuit de fluide embarqué sur un carrousel rotatif. Il a aussi pour fonction de déterminer à quels moments du mouvement de rotation du carrousel un poste de traitement donné sur le carrousel est en communication avec une pompe donnée.

Le distributeur 18 comporte deux couronnes annulaires, l'une fixe 20 et l'autre rotative 22. Les deux couronnes sont coaxiales selon l'axe X-X de rotation du carrousel 16, cet axe étant de préférence vertical, et elles sont empilées axialement l'une au-dessus de l'autre. De préférence, la couronne rotative 22, qui tourne avec le carrousel 16, est agencée au-dessus de la couronne fixe de manière que les deux couronnes soient en appui l'une contre l'autre par des faces de contact transversales 24, 26 annulaires et perpendiculaires à l'axe X-X.

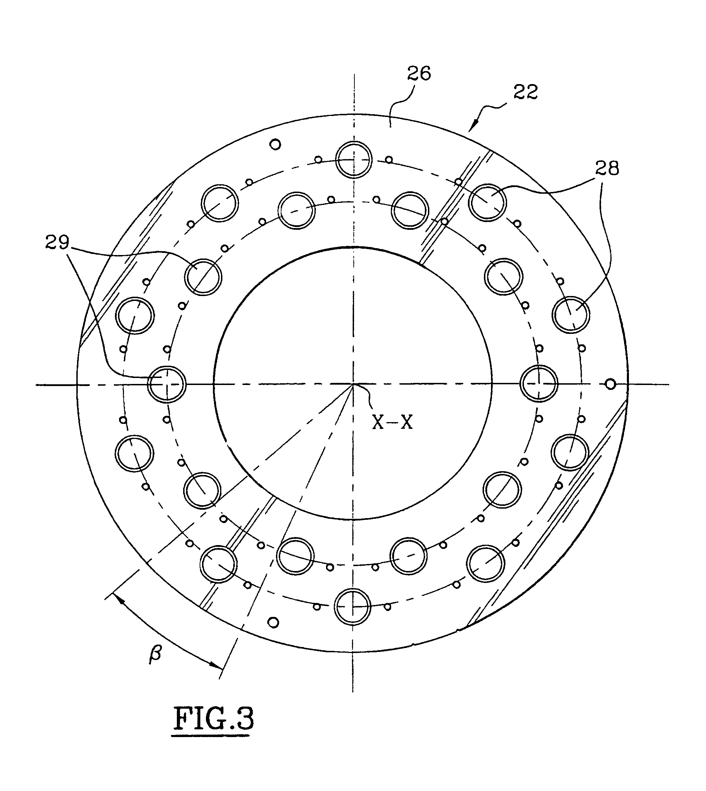

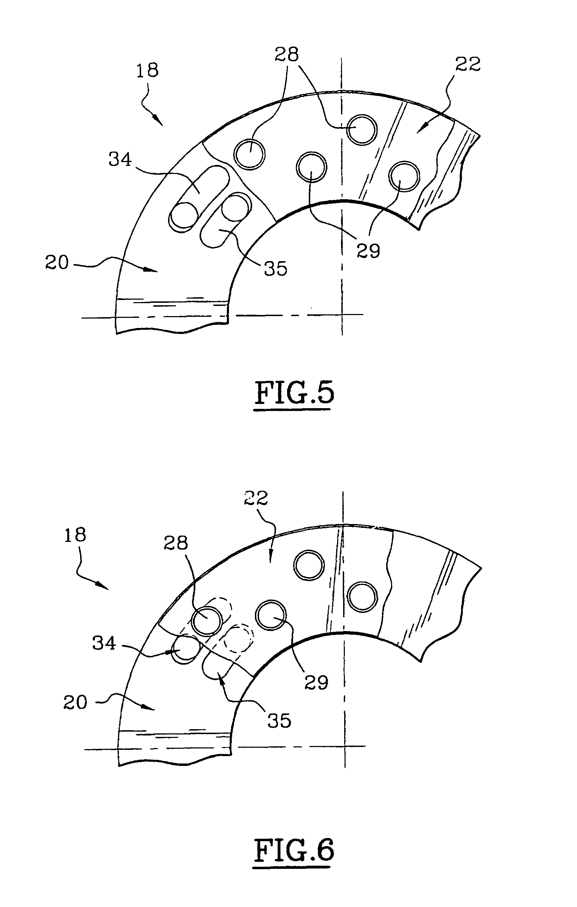

Comme on peut le voir sur les figures 3 et 4, la couronne rotative 22 est percée d'une série d'orifices 28, 29 qui la traversent axialement de part en part pour déboucher d'une part dans la face inférieure de contact 26 et d'autre part dans une face supérieure 30.

Chacun des orifices 28, 29, qui sont en l'occurrence au nombre de vingt, est destiné à être relié à l'un des postes de traitement grâce à une conduite 32 qui est fixée de manière étanche sur la face supérieure 30.

Selon l'invention, on peut voir à la figure 3 que les orifices sont répartis en deux séries. Une première série d'orifices 28 est agencée selon une cercle de grand diamètre tandis que la seconde série d'orifices 29 est agencée sur un cercle de petit diamètre. On notera que les orifices d'une même série sont répartis angulairement de manière régulière, en l'occurrence tous les 36 degrés. De plus, les deux séries d'orifices comportent le même nombre d'orifices et elles sont décalées angulairement l'une de l'autre de telle sorte que, toutes séries confondues, on trouve un orifice tous les 18 degrés, ce qui correspond à l'écartement angulaire des deux postes sur le carrousel.

Selon l'invention, tous les orifices d'une même série correspondent à des postes d'un même groupe. Dans l'exemple proposé, on note que, inversement, tous les postes d'un même groupe, c'est-à-dire tous les postes associés à une même pompe, sont alimentés par des orifices d'une même série. Cependant on peut imaginer que les postes d'un même groupe puissent être alimentés par des orifices appartenant à deux séries distinctes, c'est-à-dire par exemple des séries d'orifices disposées selon des cercles de diamètre différents.

La couronne fixe 20 est pourvue, sur sa face de contact 22, de deux séries de lumières en arc de cercle. Une première série de lumières 34, 36, 38 est agencée sur le même cercle de grand diamètre que les orifices pairs 28 tandis que la seconde série de lumières 35, 37, 39 est agencée sur le même cercle de petit diamètre que les orifices impairs 29.

Les lumières 34, 35 sont reliées respectivement aux pompes A1 et A2 servant à la première étape de pompage.

Les lumières 36, 37 sont reliées respectivement aux pompes B1 et B2 servant à la deuxième étape de pompage.

Les lumières 38, 39 sont au contraire reliées toutes les deux à la pompe C qui sert à l'étape de dépôt.

Chacune des lumières 34, 35, 36, 37, 38, 39 est reliée à la pompe associée par l'intermédiaire des trous 40 correspondants qui débouchent dans la face inférieure 42 de la couronne fixe 20 et sur lesquels sont raccordés des conduits (non représentés).

Avec cet agencement du distributeur, on comprend donc que tous les orifices d'une même série suivent la même trajectoire circulaire lors de la rotation de la couronne rotative, et qu'ils viennent donc successivement en regard avec toutes les lumières de la série correspondante. De la sorte, lorsqu'un orifice se trouve en regard d'une lumière, le poste correspondant à cet orifice se trouve mis en communication avec la pompe associée à la lumière. Avantageusement les faces de contact 24, 26 sont polies de manière qu'elles forment étanchéité par simple contact, sans qu'il soit nécessaire de recourir à des moyens complémentaires. Bien entendu, on prévoit tout de même, entre les deux faces de contact, un film d'agent lubrifiant qui, en plus d'éviter le grippage des deux surfaces, permet de limiter l'échauffement et de garantir l'étanchéité.

Comme on peut le voir sur la figure 2, les deux lumières qui correspondent à la même étape de traitement et qui appartiennent à deux séries différentes sont agencées sur le même secteur angulaire.

Cependant, on peut aussi prévoir que deux lumières correspondant à la même étape soient décalées angulairement et qu'au contraire, deux postes consécutifs sur le carrousel soient pourvus d'orifices qui seraient alignés angulairement par rapport à l'axe X-X en étant sur des diamètres différents.

Concernant les lumières 34, 35, 36, 37 correspondant à la première et à la deuxième étape de pompage, elles s'étendent sur un secteur angulaire α qui est inférieur à la distance angulaire β séparant deux orifices 28, 29 consécutifs d'un même série, ceci afin d'éviter, au cours de ces deux étapes, que deux postes puissent être reliés en même temps à une même pompe.

Par ailleurs, deux lumières d'une même série sont séparées l'une de l'autre par un secteur angulaire δ tel qu'un orifice ne puisse pas être simultanément en regard, même partiel, avec les deux lumières.

Le fonctionnement du distributeur 18 selon l'invention va maintenant être décrit en référence aux figures 5 à 8. Ces figures sont des diagrammes sur lesquels on a représenté l'image des deux lumières 34, 35 correspondant à la première étape de pompage décrite plus haut, et sur lesquelles on a superposé l'image de quatre orifices 28, 29 correspondant à quatre postes consécutifs de la machine décrite plus haut. Les différents diagrammes illustrent différentes positions successives des orifices par rapport aux lumières, et donc différentes positions angulaires relatives des deux couronnes 20, 22 du distributeur.

Dans la position illustrée à la figure 5, on se situe avant qu'aucun des quatre orifices 28, 29 n'ait atteint la lumière correspondante.

A la figure 6, on voit que la couronne rotative s'est déplacée angulairement de telle sorte que lé premier des orifices, en l'occurrence un orifice 28 correspondant à un poste pair, est arrivé en regard de la lumière 34 si bien que le premier des quatre postes, qui est associé à cet orifice, a été mis en communication avec la pompe A1 et a donc entamé la première étape de pompage. On remarque qu'à cet instant, aucun autre poste n'a entamé cette première étape de pompage.

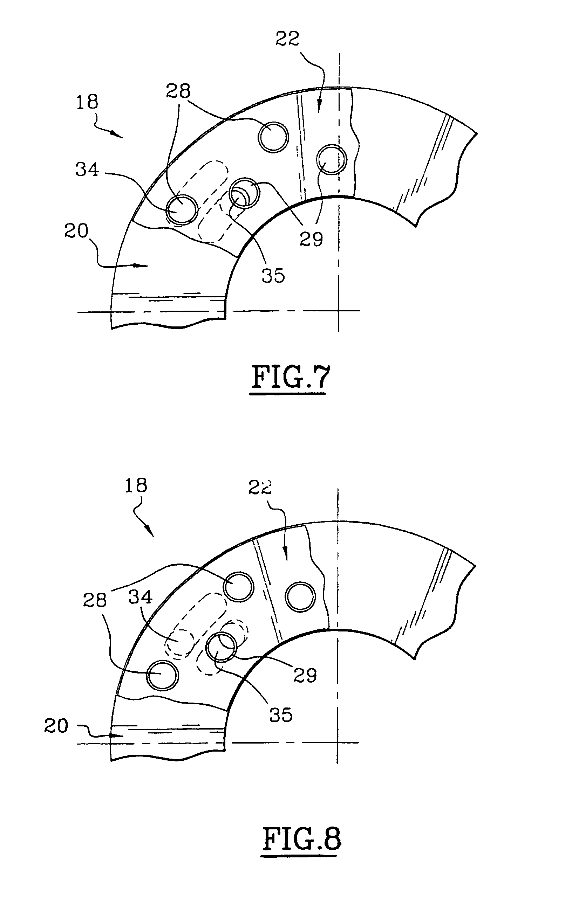

Au contraire, à la figure 7, on voit que, après rotation de la couronne 22, le premier orifice impair qui suit l'orifice pair précédemment envisagé a atteint lui aussi la lumière 35 correspondante. De la sorte, le poste qui lui est associé est mis en communication avec la pompe A2. A cet instant, le premier orifice pair est encore en regard de la lumière 34 tandis que le second orifice pair, qui correspond au troisième des quatre postes, n'est pas encore arrivé en regard de la lumière 34.

Enfin, on a illustré à la figure 8 une position ultérieure de la couronne rotative 22 dans laquelle le premier orifice impair est encore en regard de la lumière 34. Au contraire, le premier orifice pair est sorti du secteur angulaire couvert par la lumière 34, et le second orifice pair n'y est pas encore entré. De la sorte, la pompe A2 ne se trouve à cet instant en communication avec aucun poste.

On a décrit et illustré un mode préféré de réalisation d'un distributeur tournant dans lequel les couronnes sont coaxiales mais superposées axialement, les faces de contact étant alors des faces transversales planes.

Il a été choisi de disposer la couronne mobile au-dessus de la couronne fixe. Toutefois, il est possible d'inverser les deux couronnes

En variante, on peut aussi réaliser le distributeur tournant en disposant les deux couronnes de manière concentriques, l'une des couronnes étant reçue radialement à l'intérieur de l'autre. Dans ce cas, les faces de contact sont des faces cylindriques interne et externe, et les séries de groupes ou d'orifices sont décalées entre elles selon la direction de l'axe X-X.

Dans tous les cas, grâce à l'invention, on peut avoir à la fois des postes très rapprochés angulairement, donc un grand nombre de postes sur le carrousel 16, et une étape de traitement relativement longue pour chacun des postes, ceci en conservant toute l'efficacité des sources de pression, en l'occurrence les pompes, en veillant à ce qu'une source de pression ne soit jamais en communication avec deux postes en même temps.

De plus, les deux couronnes 20, 22 étant annulaires, on peut prévoir de faire passer en leur centre d'autres organes nécessaires au fonctionnement de la machine. Notamment, on pourra ainsi envisager qu'une machine comportant un nombre important de postes soit munie de deux distributeurs tournants du type de celui qui vient d'être décrit.

## Revendications

1. Machine à carrousel pour le traitement de corps creux, du type comportant plusieurs postes de traitement identiques (12, 13) destinés chacun à prendre en charge au moins un corps creux, et du type dans lequel, pour au moins une étape du traitement, on met le poste de traitement en communication avec une source de pression par l'intermédiaire de moyens de distribution comportant un raccord étanche tournant,
**caractérisée en ce que**, pour ladite étape, la machine comporte au moins deux sources de pression indépendantes et équivalentes (A1, A2), **en ce que** les postes sont répartis en autant de groupes (12, 13) que la machine comporte de sources, et **en ce que** les moyens de distribution (18) se composent d'un distributeur tournant (18) comportant deux couronnes coaxiales, l'une fixe (20) et l'autre rotative (22), qui sont en contact l'une avec l'autre de manière étanche par des faces de contact (24, 26) en vis-à-vis, **en ce que** la couronne rotative (22) comporte des orifices de communication (28, 29) qui sont reliés chacun à un poste (12, 13), qui sont répartis en au moins autant de séries que la machine comporte de sources pour ladite étape, et qui débouchent dans la face de contact (26) de la couronne rotative (22), **en ce que** les orifices d'une même série correspondent tous à des postes d'un même groupe et suivent la même trajectoire, les orifices de deux séries différentes suivant des trajectoires différentes, **en ce que** la couronne fixe (20) comporte des lumières (34, 35) qui sont reliées. à une source de pression (A1, A2) et qui débouchent chacune dans la face de contact (24) de la couronne fixe (20) de manière à se trouver sur la trajectoire d'une série d'orifices (28, 29) de la couronne rotative (22), de telle sorte qu'un poste est mis en communication avec une source de pression lorsque l'orifice correspondant se trouve en regard d'une lumière associée à cette source, **en ce que** la couronne fixe comporte au moins autant de séries distinctes d'au moins une lumière que le nombre de séries d'orifices, et **en ce que** deux sources de pression (A1, A2) sont chacune reliée à une lumière de deux séries distinctes de lumières (34, 35) de la couronne fixe (20).

2. Machine selon la revendication 1, **caractérisée en ce que** le distributeur (18) est agencé de telle façon qu'à chaque instant, au plus un poste (12, 13) se trouve en communication avec une source de pression associée.

3. Machine selon l'une quelconque des revendications précédentes, **caractérisée en ce que** le distributeur (18) est tel qu'au moins un poste (12) d'un groupe est en communication avec une source de pression associée (A1) alors qu'au moins un poste (13) d'un autre groupe est en communication avec sa propre source de pression associée (A2).

4. Machine selon l'une quelconque des revendications précédentes, **caractérisée en ce que** le raccord tournant comporte autant de voies que la machine comporte de sources pour alimenter séparément les groupes de postes, et **en ce que** les moyens de distribution comportent, en aval du raccord tournant, des moyens de vannage individuels associés à chaque poste.

5. Machine selon l'une quelconque des revendications précédentes, **caractérisée en ce que** les orifices (28, 29) de tous les postes (12, 13) d'un même groupe appartiennent à la même série.

6. Machine selon la revendication 5, **caractérisée en ce que** les faces de contact (24, 26) des deux couronnes (20, 22) sont des faces annulaires perpendiculaires à l'axe de rotation (X-X) du carrousel (16).

7. Machine selon la revendication 6, **caractérisée en ce que** les orifices (28, 29) d'une même série sont agencés selon un cercle, et **en ce que** deux séries d'orifices (28, 29) sont agencées selon deux cercles de diamètres différents.

8. Machine selon la revendication 7, **caractérisée en ce que** les orifices (28, 29) d'une même série sont répartis angulairement de manière régulière autour de l'axe de rotation (X-X) du carrousel (16), et **en ce que** les orifices (28, 29) de deux séries différentes comportant le même nombre d'orifices sont intercalés angulairement.

9. Machine selon l'une des revendications 7 ou 8, **caractérisée en ce que** les lumières (34, 35) correspondant à deux sources de pression (A1, A2) indépendantes, équivalentes et utilisées pour ladite étape, sont agencées sur le même secteur angulaire (α) et sur des diamètres différents correspondant respectivement aux diamètres des cercles selon lesquels sont agencées les séries d'orifices (28, 29) auxquelles correspondent les dites sources.

10. Machine selon la revendication 9, **caractérisée en ce que** deux orifices consécutifs d'une même série sont séparés angulairement par un secteur angulaire (β) au moins égal au secteur angulaire (α) sur lequel s'étend la lumière correspondant à ladite série.

11. Machine selon l'une quelconque des revendications 1 à 10, **caractérisée en ce que** le traitement comporte une deuxième étape pendant laquelle on met les postes de traitement (12, 13) en communication, par l'intermédiaire du distributeur tournant (18), avec des secondes sources de pression (B1, B2) pour atteindre un second niveau de pression, **en ce que** la couronne fixe (20) comporte, dans le prolongement de chacune des premières lumières (34, 35), des secondes lumières (36, 37) qui sont reliées chacune à une des secondes sources de pression (B1, B2), et **en ce que** les deux lumières ([34, 36], [35, 37]) associées à une même série d'orifices (28, 29) sont séparées par un secteur angulaire (δ) empêchant la communication simultanée d'un même orifice avec les deux lumières.

12. Machine selon l'une quelconque des revendications précédentes, **caractérisée en ce que** les sources de pression (A1, A2) sont à une pression inférieure à la pression atmosphérique.

13. Machine, selon l'une quelconque des revendications précédentes, **caractérisée en ce que** le traitement comprend une étape pour laquelle il est créé un plasma froid à basse pression, en vue du dépôt d'un revêtement sur le corps creux, **en ce que** le traitement comprend au moins une étape de pompage pour faire chuter la pression à l'intérieur du poste de traitement, et **en ce que** les sources de pression indépendantes et équivalentes permettant de réaliser l'étape de pompage sont au moins deux pompes (A1, A2).

14. Distributeur tournant pour une machine à carrousel de traitement de corps creux, la machine comportant plusieurs postes de traitement identiques (12, 13) destinés chacun à prendre en charge au moins un corps creux, du type dans lequel le distributeur (18) comporte deux couronnes coaxiales, l'une fixe (20) et l'autre rotative (22), qui sont en contact l'une avec l'autre de manière étanche par des faces de contact (24, 26) en vis-à-vis, du type dans lequel la couronne rotative (22) comporte des orifices de communication (28, 29) qui sont destinés chacun à être reliés à un poste et qui débouchent dans la face de contact de la couronne rotative, et du type dans lequel la couronne (20) fixe comporte au moins une lumière qui est destinée à être reliée à une source de pression de la machine et qui débouche dans la face de contact de la couronne fixe de manière à se trouver sur la trajectoire des orifices de la couronne rotative, de telle sorte qu'un poste est mis en communication avec la source de pression lorsque l'orifice correspondant se trouve en regard de la lumière,
**caractérisé en ce que** les orifices de la couronne rotative sont répartis en au moins deux séries (28, 29), **en ce que** les orifices d'une même série suivent la même trajectoire tandis que les orifices de deux séries différentes suivent des trajectoires différentes, **en ce que** la couronne fixe (20) comporte autant de séries distinctes d'au moins une lumière que le nombre de séries d'orifices, chacune des lumières étant agencée sur la trajectoire d'une seule série d'orifices, et **en ce que** deux sources de pression indépendantes et équivalentes sont reliées chacune à une lumière de deux séries distinctes.

15. Distributeur selon la revendication 14, **caractérisé en ce que** les faces de contact (24,26) des deux couronnes sont des faces annulaires perpendiculaires à l'axe de rotation (X-X) de la couronne rotative (22).

16. Distributeur selon la revendication 15, **caractérisé en ce que** les orifices (28, 29) d'une même série sont agencés selon un cercle, et **en ce que** deux séries d'orifices sont agencées selon deux cercles de diamètres différents.

17. Distributeur selon l'une quelconque des revendications 14 à 16, **caractérisé en ce que** les orifices (28, 29) d'une même série sont répartis angulairement de manière régulière autour de l'axe de rotation (X-X), et **en ce que** les orifices de deux séries différentes comportant le même nombre d'orifices sont intercalés angulairement.

18. Distributeur selon l'une des revendications 16 ou 17, **caractérisé en ce que** les lumières (34, 35) correspondant à deux sources de pression (A1, A2) sont agencées sur le même secteur angulaire (α) et sur des diamètres différents correspondant respectivement aux diamètres des cercles selon lesquels sont agencées les séries d'orifices (28, 29) auxquelles correspondent les dites sources.

19. Distributeur selon l'une des revendications 16 à 18, **caractérisé en ce que** deux orifices consécutifs d'une même série (28, 29) sont séparés angulairement par un secteur angulaire (β) au moins égal au secteur angulaire (α) sur lequel s'étend la lumière (34, 35) correspondant à ladite série d'orifices.

20. Distributeur selon l'une quelconque des revendications 14 à 19, **caractérisé en ce que** la couronne fixe comporte, pour chaque série de lumières, au moins deux lumières (34, 36) dans le prolongement l'une de l'autre, et **en ce que** deux lumières (34, 36) d'une même série sont séparées par un secteur angulaire (δ) empêchant la communication simultanée d'un même orifice avec les deux lumières.

## Claims

1. Turntable machine for the treatment of hollow bodies, of the type comprising a plurality of identical treatment stations (12, 13), each intended for receiving at least one hollow body, and of the type in which, for at least one step of the treatment, the treatment station is put in communication with a pressure source by distribution means comprising a leak-tight rotary connector, **characterized in that**, for the said step, the machine comprises at least two independent and equivalent pressure sources (A1, A2), **in that** the stations are distributed in as many groups (12, 13) as the machine comprises sources, and **in that** the distribution means (18) are composed of a rotary distributor (18) comprising two coaxial rings, one fixed (20) and the other rotational (22), which are in contact with one another in a leak-tight manner with mutually confronting contact faces (24, 26), **in that** the rotational ring (22) comprises communication orifices (28, 29) which are each connected to a station (12, 13), which are distributed in at least as many series as the machine comprises sources for the said step and which issue into the contact face (26) of the rotational ring (22), **in that** the orifices of the same series all correspond to stations of the same group and follow the same trajectory, the orifices of two different series following different trajectories, **in that** the fixed ring (20) comprises apertures (34, 35) which are connected to a pressure source (A1, A2) and which each issue into the contact face (24) of the fixed ring (20) so as to be located on the trajectory of a series of orifices (28, 29) of the rotational ring (22), in such a way that a station is put in communication with a pressure source when the corresponding orifice is opposite an aperture associated with this source, **in that** the fixed ring comprises at least as many separate series of at least one aperture as the number of series of orifices, and **in that** two pressure sources (A1, A2) are each connected to an aperture of two separate series of apertures (34, 35) of the fixed ring (20).

2. Machine according to Claim 1, **characterized in that** the distributor (18) is arranged in such a way that, at each moment, at most one station (12, 13) is in communication with an associated pressure source.

3. Machine according to either one of the preceding claims, **characterized in that** the distributor (18) is such that at least one station (12) of a group is in communication with an associated pressure source (A1) while at least one station (13) of another group is in communication with its own associated pressure source (A2).

4. Machine according to either one of the preceding claims, **characterized in that** the rotary connector comprises as many paths as the machine comprises sources in order to feed the groups of stations separately, and **in that** the distribution means comprise, downstream of the rotary connector, individual valve regulation means associated with each station.

5. Machine according to any one of the preceding claims, **characterized in that** the orifices (28, 29) of all the stations (12, 13) of the same group belong to the same series.

6. Machine according to Claim 5, **characterized in that** the contact faces (24, 26) of the two rings (20, 22) are annular faces perpendicular to the axis of rotation (X-X) of the turntable (16).

7. Machine according to Claim 6, **characterized in that** the orifices (28, 29) of the same series are arranged according to a circle, and **in that** two series of orifices (28, 29) are arranged according to two circles of different diameters.

8. Machine according to Claim 7, **characterized in that** the orifices (28, 29) of the same series are distributed angularly in a regular manner about the axis of rotation (X-X) of the turntable (16), and **in that** the orifices (28, 29) of two different series comprising the same number of orifices are interposed angularly.

9. Machine according to either of Claims 7 and 8, **characterized in that** the apertures (34, 35) corresponding to two independent equivalent pressure sources (A1, A2) used for the said step are arranged on the same angular sector (α) and on different diameters corresponding respectively to the diameters of the circles according to which are arranged the series of orifices (28, 29) to which the said sources correspond.

10. Machine according to Claim 9, **characterized in that** two consecutive orifices of the same series are separated angularly by an angular sector (β) at least equal to the angular sector (α) over which the aperture corresponding to the said series extends.

11. Machine according to any one of Claims 1 to 10, **characterized in that** the treatment comprises a second step, during which the treatment stations (12,-13) are put in communication, by means of the rotary distributor (18), with second pressure sources (B1, B2), in order to achieve a second pressure level, **in that** the fixed ring (20) comprises, in the prolongation of each of the first apertures (34, 35), second apertures (36, 37) which are each connected to one of the second pressure sources (B1, B2), and **in that** the two apertures ([34, 36], [35, 37]) associated with the same series of orifices (28, 29) are separated by an angular sector (δ) preventing the simultaneous communication of the same orifice with the two apertures.

12. Machine according to any one of the preceding claims, **characterized in that** the pressure sources (A1, A2) are at a pressure below the atmospheric pressure.

13. Machine according to any one of the preceding claims, **characterized in that** the treatment comprises a step for which a low-pressure cold plasma is generated for the purpose of depositing a covering onto the hollow body, **in that** the treatment comprises at least one pumping step for causing the pressure within the treatment station to fall, and **in that** the independent and equivalent pressure sources making it possible to carry out the pumping step are at least two pumps (A1, A2).

14. Rotary distributor for a turntable machine for the treatment of hollow bodies, the machine comprising a plurality of identical treatment stations (12, 13), each intended for receiving at least one hollow body, of the type in which the distributor (18) comprises two coaxial rings, one fixed (20) and the other rotational (22), which are in contact with one another in a leak-tight manner with mutually confronting contact faces (24, 26), of the type in which the rotational ring (22) comprises communication orifices (28, 29) which are each intended to be connected to a station and which issue into the contact face of the rotational ring, and of the type in which the fixed ring (20) comprises at least one aperture which is intended to be connected to a pressure source of the machine and which issues into the contact face of the fixed ring so as to be located on the trajectory of the orifices of the rotational ring, in such a way that a station is put in communication with the pressure source when the corresponding orifice is opposite the aperture, **characterized in that** the orifices of the rotational ring are distributed in at least two series (28, 29), **in that** the orifices of the same series follow the same trajectory, whilst the orifices of two different series follow different trajectories, **in that** the fixed ring (20) comprises as many separate series of at least one aperture as the number of series of orifices, each of the apertures being arranged on the trajectory of a single series of orifices, and **in that** two independent and equivalent pressure sources are each connected to an aperture of two separate series.

15. Distributor according to Claim 14, **characterized in that** the contact faces (24, 26) of the two rings are annular faces perpendicular to the axis of rotation (X-X) of the rotational ring (22).

16. Distributor according to Claim 15, **characterized in that** the orifices (28, 29) of the same series are arranged according to a circle, and **in that** two series of orifices are arranged according to two circles of different diameters.

17. Distributor according to any one of Claims 14 to 16, **characterized in that** the orifices (28, 29) of the same series are distributed angularly in a regular manner about the axis of rotation (X-X), and **in that** the orifices of two different series comprising the same number of orifices are interposed angularly.

18. Distributor according to either of Claims 16 and 17, **characterized in that** the apertures (34, 35) corresponding to two pressure sources (A1, A2) are arranged on the same angular sector (α) and on different diameters corresponding respectively to the diameters of the circles according to which are arranged the series of orifices (28, 29) to which the said sources correspond.

19. Distributor according to one of Claims 16 to 18, **characterized in that** two consecutive orifices of the same series (28, 29) are separated angularly by an angular sector (β) at least equal to the angular sector (α) over which the aperture (34, 35) corresponding to the said series of orifices extends.

20. Distributor according to any one of Claims 14 to 19, **characterized in that** the fixed ring comprises, for each series of apertures, at least two apertures (34, 36) in the prolongation one of the other, and **in that** two apertures (34, 36) of the same series are separated by an angular sector (δ) preventing the simultaneous communication of the same orifice with the two apertures.

## Patentansprüche

1. Drehtischmaschine zur Bearbeitung von Hohlkörpern, von der Art, die mehrere gleiche Bearbeitungsplätze (12, 13) aufweist, die je dazu bestimmt sind, mindestens einen Hohlkörper aufzunehmen, und von der Art, bei der der Bearbeitungsplatz zumindest für einen Schritt der Bearbeitung über einen dichten Drehanschluss aufweisende Verteilungsmittel mit einer Druckquelle in Verbindung gesetzt wird,
**dadurch gekennzeichnet, dass** die Maschine für den Schritt mindestens zwei unabhängige und gleichwertige Druckquellen (A1, A2) aufweist, dass die Plätze in ebenso viele Gruppen (12, 13) verteilt sind, wie die Maschine Quellen aufweist, und dass die Verteilungsmittel (18) aus einem drehenden Verteiler (18) bestehen, der zwei koaxiale Kränze aufweist, der eine ortsfest (20) und der andere drehbar (22), die über einander gegenüberliegende Kontaktflächen (24, 26) dicht miteinander in Kontakt stehen, dass der drehbare Kranz (22) Verbindungsöffnungen (28, 29) aufweist, die je mit einem Platz (12, 13) verbunden sind, die in mindestens ebenso vielen Reihen verteilt sind wie die Maschine Quellen für den Schritt aufweist, und die in der Kontaktfläche (26) des drehbaren Kranzes (22) münden, dass die Öffnungen einer gleichen Reihe alle Plätzen einer gleichen Gruppe entsprechen und dem gleichen Streckenverlauf folgen, wobei die Öffnungen von zwei unterschiedlichen Reihen unterschiedlichen Streckenverläufen folgen, dass der ortsfeste Kranz (20) Langlöcher (34, 35) aufweist, die mit einer Druckquelle (A1, A2) verbunden sind und je in der Kontaktfläche (24) des ortsfesten Kranzes (20) münden, um sich auf dem Streckenverlauf einer Reihe von Öffnungen (28, 29) des drehbaren Kranzes (22) zu befinden, so dass ein Platz mit einer Druckquelle in Verbindung gebracht wird, wenn die entsprechende Öffnung sich vor einem dieser Quelle zugeordneten Langloch befindet, dass der ortsfeste Kranz mindestens so viele verschiedene Reihen von mindestens einem Langloch aufweist wie es Reihen von Öffnungen gibt, und dass zwei Druckquellen (A1, A2) je mit einem Langloch von zwei unterschiedlichen Reihen von Langlöchern (34, 35) des ortsfesten Kranzes (20) verbunden sind.

2. Maschine nach Anspruch 1, **dadurch gekennzeichnet, dass** der Verteiler (18) so ausgelegt ist, dass zu jedem Zeitpunkt höchstens ein Platz (12, 13) mit einer zugeordneten Druckquelle in Verbindung steht.

3. Maschine nach einem der vorhergehenden Ansprüche, **dadurch gekennzeichnet, dass** der Verteiler (18) derart ist, dass mindestens ein Platz (12) einer Gruppe mit einer zugeordneten Druckquelle (A1) in Verbindung steht, während mindestens ein Platz (13) einer anderen Gruppe mit seiner eigenen zugeordneten Druckquelle (A2) in Verbindung steht.

4. Maschine nach einem der vorhergehenden Ansprüche, **dadurch gekennzeichnet, dass** der Drehanschluss ebenso viele Kanäle aufweist wie die Maschine Quellen aufweist, um die Gruppen von Plätzen getrennt zu speisen, und dass die Verteilungsmittel stromabwärts hinter dem Drehanschluss jedem Platz zugeordnete, eigene Ventilbetätigungsmittel aufweisen.

5. Maschine nach einem der vorhergehenden Ansprüche, **dadurch gekennzeichnet, dass** die Öffnungen (28, 29) aller Plätze (12, 13) einer gleichen Gruppe zur gleichen Reihe gehören.

6. Maschine nach Anspruch 5, **dadurch gekennzeichnet, dass** die Kontaktflächen (24, 26) der beiden Kränze (20, 22) ringförmige Flächen senkrecht zur Drehachse (X-X) des Drehtischs (16) sind.

7. Maschine nach Anspruch 6, **dadurch gekennzeichnet, dass** die Öffnungen (28, 29) einer gleichen Reihe kreisförmig angeordnet sind, und dass zwei Reihen von Öffnungen (28, 29) in zwei Kreisen mit unterschiedlichen Durchmessern angeordnet sind.

8. Maschine nach Anspruch 7, **dadurch gekennzeichnet, dass** die Öffnungen (28, 29) einer gleichen Reihe mit gleichmäßigem Winkelabstand um die Drehachse (X-X) des Drehtischs (16) verteilt sind, und dass die Öffnungen (28, 29) von zwei unterschiedlichen Reihen, die die gleiche Anzahl von Öffnungen aufweisen, winkelmäßig verschachtelt sind.

9. Maschine nach einem der Ansprüche 7 oder 8, **dadurch gekennzeichnet, dass** die zwei unabhängigen, gleichwertigen und für den Schritt verwendeten Druckquellen (A1, A2) entsprechenden Langlöcher (34, 35) im gleichen Winkelsektor (α) und auf unterschiedlichen Durchmessern angeordnet sind, die je den Durchmessern der Kreise entsprechen, gemäß denen die Reihen von Öffnungen (28, 29) angeordnet sind, denen die Quellen entsprechen.

10. Maschine nach Anspruch 9, **dadurch gekennzeichnet, dass** zwei aufeinanderfolgende Öffnungen einer gleichen Reihe winkelmäßig durch einen Winkelsektor (β) getrennt sind, der mindestens gleich dem Winkelsektor (α) ist, auf dem sich das der Reihe entsprechende Langloch erstreckt.

11. Maschine nach einem der Ansprüche 1 bis 10, **dadurch gekennzeichnet, dass** die Bearbeitung einen zweiten Schritt aufweist, während dem die Bearbeitungsplätze (10, 12) über den drehenden Verteiler (18) mit zweiten Druckquellen (B1, B2) in Verbindung gebracht werden, um einen zweiten Druckpegel zu erreichen, dass der ortsfeste Kranz (20) in der Verlängerung jedes der ersten Langlöcher (34, 35) zweite Langlöcher (36, 37) aufweist, die je mit einer der zweiten Druckquellen (B1, B2) verbunden sind, und dass die beiden Langlöcher ([34, 36], [35, 37]), die einer gleichen Reihe von Öffnungen (28, 29) zugeordnet sind, von einem Winkelsektor (δ) getrennt werden, der die gleichzeitige Verbindung einer gleichen Öffnung mit den beiden Langlöchern verhindert.

12. Maschine nach einem der vorhergehenden Ansprüche, **dadurch gekennzeichnet, dass** die Druckquellen (A1, A2) auf einem niedrigeren Druck als Atmosphärendruck sind.

13. Maschine nach einem der vorhergehenden Ansprüche, **dadurch gekennzeichnet, dass** die Bearbeitung einen Schritt aufweist, für den ein kaltes Niederdruckplasma zum Aufbringen einer Beschichtung auf den Hohlkörper erzeugt wird, dass die Bearbeitung mindestens einen Pumpschritt aufweist, um den Druck innerhalb des Bearbeitungsplatzes fallen zu lassen, und dass die unabhängigen und gleichwertigen Druckquellen, die die Durchführung des Pumpschritts ermöglichen, mindestens zwei Pumpen (A1, A2) sind.

14. Drehender Verteiler für eine Drehtischmaschine zur Bearbeitung von Hohlkörpern, wobei die Maschine mehrere gleiche Bearbeitungsplätze (12, 13) aufweist, die je dazu bestimmt sind, mindestens einen Hohlkörper aufzunehmen, von der Art, bei der der Verteiler (18) zwei koaxiale Kränze aufweist, der eine ortsfest (20) und der andere drehbar (22), die über einander gegenüberliegende Kontaktflächen (24, 26) dicht miteinander in Kontakt stehen, von der Art, bei der der drehbare Kranz (22) Verbindungsöffnungen (28, 29) aufweist, die dazu bestimmt sind, je mit einem Platz verbunden zu werden und die in der Kontaktfläche des drehbaren Kranzes münden, und von der Art, bei der der ortsfeste Kranz (20) mindestens ein Langloch aufweist, das dazu bestimmt ist, mit einer Druckquelle der Maschine verbunden zu werden und das in der Kontaktfläche des ortsfesten Kranzes derart mündet, dass es sich auf dem Streckenverlauf der Öffnungen des drehbaren Kranzes befindet, so dass ein Platz mit der Druckquelle in Verbindung gebracht wird, wenn die entsprechende Öffnung sich vor dem Langloch befindet,
**dadurch gekennzeichnet, dass** die Öffnungen des drehbaren Kranzes in mindestens zwei Reihen (28, 29) verteilt sind, dass die Öffnungen einer gleichen Reihe dem gleichen Streckenverlauf folgen, während die Öffnungen von zwei unterschiedlichen Reihen unterschiedlichen Streckenverläufen folgen, dass der ortsfeste Kranz (20) so viele unterschiedliche Reihen mit mindestens einem Langloch aufweist wie es Reihen von Öffnungen gibt, wobei jedes der Langlöcher auf dem Streckenverlauf einer einzigen Reihe von Öffnungen angeordnet ist, und dass zwei unabhängige und gleichwertige Druckquellen je mit einem Langloch von zwei unterschiedlichen Reihen verbunden sind.

15. Verteiler nach Anspruch 14, **dadurch gekennzeichnet, dass** die Kontaktflächen (24, 26) der beiden Kränze ringförmige Flächen senkrecht zur Drehachse (X-X) des drehbaren Kranzes (22) sind.

16. Verteiler nach Anspruch 15, **dadurch gekennzeichnet, dass** die Öffnungen (28, 29) einer gleichen Reihe kreisförmig angeordnet sind, und dass zwei Reihen von Öffnungen gemäß zwei Kreisen mit unterschiedlichen Durchmessern angeordnet sind.

17. Verteiler nach einem der Ansprüche 14 bis 16, **dadurch gekennzeichnet, dass** die Öffnungen (28, 29) einer gleichen Reihe mit gleichmäßigem Winkelabstand um die Drehachse (X-X) verteilt sind, und dass die Öffnungen von zwei unterschiedlichen Reihen mit der gleichen Anzahl von Öffnungen winkelmäßig verschachtelt sind.

18. Verteiler nach einem der Ansprüche 16 oder 17, **dadurch gekennzeichnet, dass** die zwei Druckquellen (A1, A2) entsprechenden Langlöcher (34, 35) im gleichen Winkelsektor (α) und auf unterschiedlichen Durchmessern angeordnet sind, die je den Durchmessern der Kreise entsprechen, gemäß denen die Reihen von Öffnungen (28, 29) angeordnet sind, denen die Quellen entsprechen.

19. Verteiler nach einem der Ansprüche 16 bis 18, **dadurch gekennzeichnet, dass** zwei aufeinanderfolgende Öffnungen einer gleichen Reihe (28, 29) winkelmäßig durch einen Winkelsektor (β) getrennt sind, der mindestens gleich dem Winkelsektor (α) ist, auf dem sich das der Reihe von Öffnungen entsprechende Langloch (34, 35) erstreckt.

20. Verteiler nach einem der Ansprüche 14 bis 19, **dadurch gekennzeichnet, dass** der ortsfeste Kranz für jede Reihe von Langlöchern mindestens zwei Langlöcher (34, 36) in gegenseitiger Verlängerung aufweist, und dass zwei Langlöcher (34, 36) einer gleichen Reihe durch einen Winkelsektor (δ) getrennt werden, der die gleichzeitige Verbindung der gleichen Öffnung mit den beiden Langlöchern verhindert.
